# EUROPEAN PATENT SPECIFICATION

(11) **EP 3 346 535 B1**
(45) Date of publication and mention of the grant of the patent: **02.10.2019**
(21) Application number: 16841097.5
(22) Date of filing: 25.08.2016
(51) Int. Cl.: H01M 8/04858, H01M 8/00, H01M 8/10, H01M 8/04828, H01M 8/249

(54) **FUEL CELL SYSTEM AND ASSEMBLY OF SAME**
BRENNSTOFFZELLENSYSTEM UND MONTAGE DAVON
SYSTÈME DE PILES À COMBUSTIBLE ET SON MONTAGE

(30) Priority: 01.09.2015 JP 2015171629
(43) Date of publication of application: 11.07.2018
(73) Proprietor: Panasonic Intellectual Property Management Co., Ltd., Osaka-shi, Osaka 540-6207 (JP)
(72) Inventor: TAMURA, Yoshio, Osaka-sh,Osaka 540-6207 (JP); TANIYAMA, Akiko, Osaka -shi, Osaka-6207 (JP); OZEKI, Masataka, Osaka-shi, Osaka 540-6207 (JP)
(74) Representative: Grünecker Patent- und Rechtsanwälte PartG mbB
(86) International application number: PCT/JP2016/003873
(87) International publication number: WO 2017/038061

(56) References cited:
- DE-A1-102012 010 173
- JP-A- H0 916 427
- JP-A- 2004 178 877
- JP-A- 2005 278 257
- US-A1- 2011 221 269
- US-A1- 2014 089 055

## Description

### TECHNICAL FIELD

The present invention relates to a fuel cell system on which a plurality of fuel cell stacks are mounted, and an assembly of the same.

### BACKGROUND ART

Recently, a home-use fuel cell system that is installed and used in a detached house, collective housing, and the like has been known. The home use fuel cell system is configured to cover power consumed in a home, and its power generation output is small, for example, 0.7 kW to 1 kW.

Hence, in order to acquire a power generation output of, for example, 3 kW to 5 kW by using such a home-use fuel cell system, a fuel cell system for acquiring the power generation output while connecting a plurality of fuel cell stacks in parallel has been proposed (for example, refer to JP 4217644 B1).

FIG. 7 is a block diagram showing a conventional power generation system described in JP 4217644 B1. As illustrated in FIG. 7, power generation system 300 such as a fuel cell system is configured with direct current (DC) power supplies 6A to 6C and power controllers 2A to 2C.

Each of DC power supplies 6A to 6C is a power generation device that outputs DC power, such as a fuel cell stack and the like. Power controllers 2A to 2C such as inverters convert DC power supplied from DC power supplies 6A to 6C into alternating current (AC) power, to connect the converted AC power to a power system.

In conventional power generation system 300, upon performing a power system linkage operation, when power failure has occurred in the power system, a countermeasure for detecting the power failure on a side of power generation system 300 and stopping an operation of power generation system 300 needs to be implemented, in order to avoid a state in which power controllers 2A to 2C perform an isolated operation. Hence, among power controllers 2A to 2C, one power controller that has started first is set as a master power controller, and the master power controller detects the isolated operation.

This configuration prevents a failure in which the isolated operation state cannot be detected due to, for example, mutual interference of a plurality of power controllers respectively detecting the isolated operation.

However, in the configuration of the conventional power generation system described above, a power controller set as the master power controller needs to constantly detect the isolated operation state. Therefore, an operation time of a fuel cell stack that is a DC power supply and is connected to the master power controller becomes long.

In the configuration of the conventional power generation system described above, it is not taken into account that the fuel cell stack is degraded more as its operation time becomes longer. Therefore, the fuel cell stack connected to the master power controller is degraded most. Even when fuel cell stacks connected to other power controllers are normal, the fuel cell system cannot be used when the fuel cell stack connected to the master power controller reaches its durability life, which causes a problem.

Further, when power generated by the fuel cell system is connected to system power supplied from, for example, an electric power company, the isolated operation of the fuel cell system needs to be detected, in cases where the system power is cut due to the power failure and the like. The power controller detects the isolated operation. When a plurality of power controllers simultaneously detect the isolated operation, the failure may occur in which the isolated operation state cannot be detected due to, for example, mutual interference in some cases.

Reference JP 2004/178877 (A) discloses a a fuel cell system with a plurality of fuel cells, DC/AC converters, and power controllers for controlling output power from the DC/AC converters. All of these cell units are connected in parallel and cooperative operation control part is provided for adjusting shared output power of the cell units.

Reference JP H09/16427 (A) discloses a general master-slave system wherein a slave device can take over the function of a master device in case of a malfunction of the master device.

Reference JP 2005/278257 (A) discloses a power generation system which includes two or more sets of solar cell modules and inverters for converting DC power into AC power, being connected to the modules. Each inverter is connected in parallel to supply a system power source with AC power. One inverter is set as a master which detects the single operation state being such a state that the power supply from the system power source is stopped, from among two or more inverters within the system, and other inverters are set as slaves which do not detect the single operation state.

US 2014/089055 (A1) discloses a fuel cell system assembly equipped with a plurality of fuel cell systems each having a plurality of fuel cell stacks and a plurality of power controllers. The plurality of fuel cell systems is configured to operated in conjunction with each other. An assembly controller is provided for controlling the plurality of fuel cells stacks and the plurality of power controllers.

It is an object of the present invention to overcome the conventional problems descibed above. More specifically, it is an object of the present invention to provide a fuel cell system and an assembly of the same, which prevent a failure in which an isolated operation state cannot be detected and prevent a case in which degradation of a specific fuel cell stack is progressed and therefore the life time of a fuel cell system is shortened, by providing a master power controller and a slave power controller.

This is achieved by the features of the independent claims. Preferred embodiments are the subject matter of the dependent claims.

More specifically, a fuel cell system according to an example of exemplary embodiments of the present invention includes a plurality of fuel cell stacks configured to perform power generation using oxygen containing gas and oxidizing gas, and a plurality of power controllers respectively connected to the plurality of fuel cell stacks on a one-to-one basis, to extract power generated by the plurality of fuel cell stacks. Furthermore, the fuel cell system according to an example of the exemplary embodiments of the present invention includes a controller configured to control operations of the plurality of fuel cell stacks and the plurality of power controllers such that a number of the plurality of fuel cell stacks under operation and the plurality of power controllers under operation is varied according to a load to be driven. In the fuel cell system according to an example of the exemplary embodiments of the present invention, only one of the plurality of power controllers is set as a master controller, and power controllers other than the master power controller are set as slave power controllers. In addition, in the fuel cell system according to an example of the exemplary embodiments of the present invention, the master power controller is set from among the plurality of power controllers such that operation times of fuel cell stacks connected to the slave power controllers become longer than an operation time of a fuel cell stack connected to the master power controller.

With this configuration, the operation time of the fuel cell stack connected to the master power controller can be suppressed to the same time as the operation times of the fuel cell stacks connected to the slave power controllers, thereby preventing a case in which degradation of only the fuel cell stack connected to the master power controller is progressed in comparison with other fuel cell stacks, and therefore a life time of a fuel cell system is shortened. In addition, among the power controllers included in the fuel cell system, only one power controller is configured to detect the isolated operation as the master power controller. Therefore, the operation times of the fuel cell stacks can be equalized while preventing occurrence of the failure in which the fuel cell system cannot detect the isolated operation, and therefore the life time of the fuel cell system can be prevented from being shortened.

Furthermore, in the fuel cell system according to an example of the exemplary embodiments of the present invention, when a difference between the operation time of the fuel cell stack connected to the master power controller and the operation times of the fuel cell stacks connected to the slave power controllers becomes not less than a predetermined time, a fuel cell stack that is in an operation stop state may be caused to perform power generation, and a power controller connected to a fuel cell stack with the shortest operation time may be set as the master power controller. With this configuration, the operation time of the fuel cell stack connected to the master power controller can be prevented from becoming long while exceeding the predetermined time in comparison with the operation times of the other fuel cell stacks, thereby preventing a case in which degradation of a specific fuel cell stack is progressed, and therefore the life time of the fuel cell system is shortened.

Furthermore, the fuel cell system according to an example of the exemplary embodiments of the present invention includes a plurality of fuel cell stacks configured to perform power generation using oxygen containing gas and oxidizing gas, and a plurality of power controllers respectively connected to the plurality of fuel cell stacks on a one-to-one basis, to extract power generated by the plurality of fuel cell stacks. In addition, the fuel cell system according to an example of the exemplary embodiments of the present invention includes a controller configured to control operations of the plurality of fuel cell stacks and the plurality of power controllers such that a number of the plurality of fuel cell stacks under operation and the plurality of power controllers under operation is varied according to magnitude of a load to be driven, and a voltage measurement unit that measures respective voltages of the plurality of fuel cell stacks. In the fuel cell system according to an example of the exemplary embodiments of the present invention, the controller sets only one of the plurality of power controllers as the master controller, and sets power controllers other than the master power controller as slave power controllers. Moreover, in the fuel cell system according to an example of the exemplary embodiments of the present invention, when a voltage of a fuel cell stack connected to the master power controller becomes less than a predetermined value, the controller sets a different power controller among the plurality of power controllers as the master power controller. With this configuration, a degradation state of the fuel cell stack connected to the master power controller can be confirmed based on the voltage. When the degradation is progressed, the power controller is changed, thereby preventing degradation of the fuel cell stack connected to the master power controller from being extremely progressed in comparison with the other fuel cell stacks, and preventing the life time of the fuel cell system from being shortened.

Furthermore, in the fuel cell system according to an example of the exemplary embodiments of the present invention, the power controllers may be configured with system linkage inverters, and the slave power controllers may be configured not to detect the isolated operation. This configuration can prevent the failure in which the isolated operation state cannot be detected due to, for example, mutual interference of the plurality of power controllers respectively detecting the isolated operation in the fuel cell system.

Furthermore, a fuel-cell-system assembly according to an example of the exemplary embodiments of the present invention includes a plurality of fuel cell stacks that perform power generation using oxygen containing gas and oxidizing gas, and a plurality of power controllers respectively connected to the plurality of fuel cell stacks on a one-to-one basis, to extract power generated by the plurality of fuel cell stacks. In the fuel-cell-system assembly according to an example of the exemplary embodiments of the present invention, the plurality of fuel cell systems are configured to operate in conjunction with each other. Furthermore, the fuel-cell-system assembly according to an example of the exemplary embodiments of the present invention includes an assembly controller that controls the plurality of fuel cell stacks and the plurality of power controllers such that only one of the plurality of power controllers included in the plurality of fuel cell system is set as a master power controller. With this configuration, in the fuel-cell-system assembly in which the plurality of fuel cell systems operate in conjunction with each other, the master power controller does not need to be separately disposed in each of the plurality of fuel cell systems, and one master power controller can be provided for the fuel-cell-system assembly. This configuration can prevent the failure in which the isolated operation state cannot be detected due to, for example, mutual interference of the plurality of fuel cell systems respectively detecting the isolated operation.

Furthermore, in the fuel-cell-system assembly, one power controller is configured to be set as the master power controller. Therefore, an operation time of a fuel cell system without the master power controller can be suppressed, and life times of the plurality of fuel cell systems can be prevented from being shortened in comparison with a case in which each of the plurality of fuel cell systems includes the master power controller.

Furthermore, the fuel-cell-system assembly according to an example of the exemplary embodiments of the present invention may be configured such that the assembly controller sets, as the master power controller, a power controller connected to a fuel cell stack with the shortest operation time among power controllers included in the plurality of fuel cell systems. With this configuration, as the fuel-cell-system assembly, the operation time of the specific fuel cell stack can be prevented from becoming long. Therefore, operation times of respective fuel cell stacks can be equalized, and a life time of the fuel-cell-system assembly can be prevented from being shortened.

### BRIEF DESCRIPTION OF DRAWINGS

FIG. 1 is a block diagram illustrating a configuration of a fuel cell system according to a first exemplary embodiment of the present invention.
FIG. 2 is a flowchart illustrating an operating method for the fuel cell system according to the first exemplary embodiment of the present invention.
FIG. 3 is a block diagram illustrating a configuration of a fuel cell system according to a second exemplary embodiment of the present invention.
FIG. 4 is a flowchart illustrating an operating method for the fuel cell system according to the second exemplary embodiment of the present invention.
FIG. 5 is a block diagram illustrating a configuration of a fuel-cell-system assembly according to a third exemplary embodiment of the present invention.
FIG. 6 is a flowchart illustrating an operating method for the fuel-cell-system assembly according to the third exemplary embodiment of the present invention.

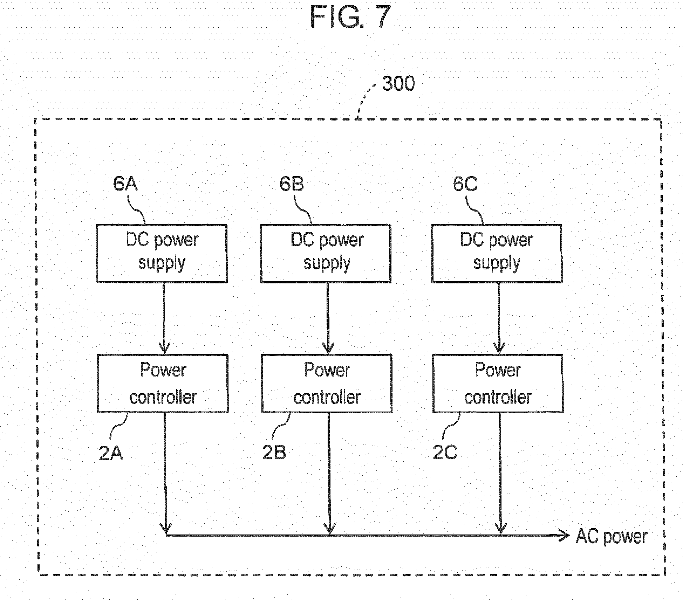

FIG. 7 is a block diagram illustrating a configuration of a conventional power generation system.

### DESCRIPTION OF EMBODIMENTS

Hereinafter, exemplary embodiments according to the present invention will be described with reference to the drawings. Note that the present invention is not limited by the exemplary embodiments below.

### (First exemplary embodiment)

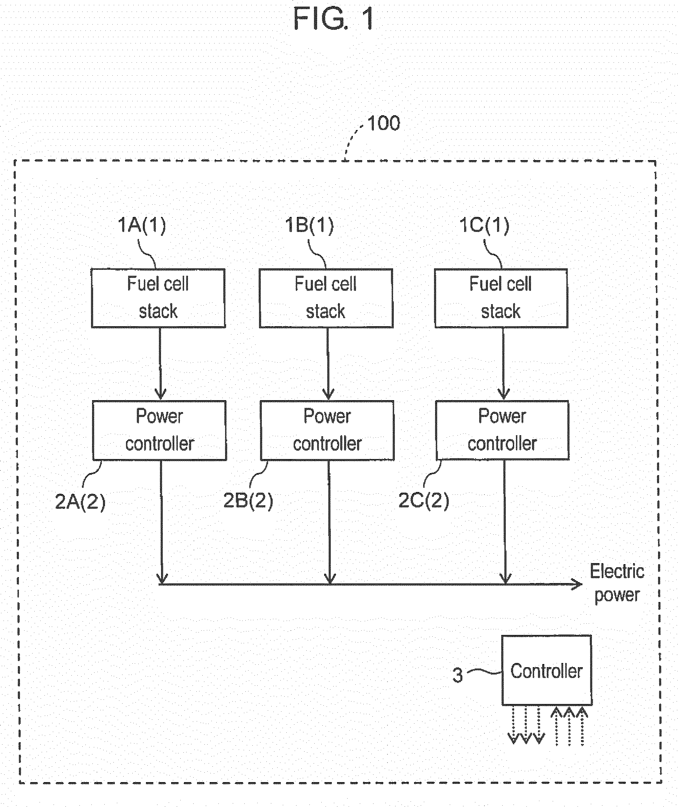

FIG. 1 is a block diagram illustrating a fuel cell system according to a first exemplary embodiment of the present invention.

In FIG. 1, fuel cell system 100 includes fuel cell stacks 1A, 1B, 1C, power controllers 2A, 2B, 2C, and controller 3.

Fuel cell stacks 1A to 1C are configured to generate power using oxygen containing gas and oxidizing gas. The oxygen containing gas and the oxidizing gas are supplied from respective supply apparatuses (not illustrated). Note that, in this exemplary embodiment, pure hydrogen gas is used as the oxygen containing gas, and air is used as the oxidizing gas. A solid polymer fuel cell is used as the fuel cell stack.

Power controllers 2A to 2C are respectively connected to fuel cell stacks 1A to 1C on a one-to-one basis, to extract power generated by corresponding fuel cell stacks 1A to 1C. In this exemplary embodiment, inverters for converting DC power generated by fuel cell stacks 1A to 1C into AC power are respectively used as power controllers 2A to 2C.

Controller 3 may be any controller as long as the controller has a control function for controlling fuel cell system 100, and includes an operation processor (not illustrated) and a storage (not illustrated) that stores a control program. A central processing unit (CPU) is used as the operation processor, for example. A memory is used as the storage, for example.

The solid polymer fuel cell generally has a structure in which a membrane electrode assembly (MEA) is held between separators. The MEA generally has a structure in which a gas diffusion layer, a cathode catalyst layer, a solid polymer electrolyte membrane, an anode catalyst layer, and the gas diffusion layer are laminated. A cell reaction proceeds in a catalyst layer formed of a catalyst, a carrier for carrying the catalyst, and an ionomer (ion-conducting polymer).

It has been known that fuel cell stacks 1A to 1C are degraded more as an operation time becomes longer, and voltages of fuel cell stacks 1A to 1C are lowered by the degradation. In general, the degradation is caused by, for example, a change in an electrode structure due to poisoning of the cathode catalyst layer by impurity components in air, and poisoning of the anode catalyst layer by impurity components in the fuel gas.

When the electrode structures of fuel cell stacks 1A to 1C are changed, gas diffusivity and discharge performance of produced water are lowered, thereby lowering the voltages. When the voltages of fuel cell stacks 1A to 1C are lowered, required power cannot be output from fuel cell stacks 1A to 1C, and therefore durability lives of fuel cell stacks 1A to 1C are terminated.

When operation times of fuel cell stacks 1A to 1C become longer, the voltages output from fuel cell stacks 1A to 1C are lowered. The operation times are times during which respective fuel cell stacks 1A to 1C perform power generation.

A reference mark attached to a plurality of identical elements will be described hereinafter. For example, with respect to "fuel cell stacks 1A to 1C", suffixes "A", "B", and "C" are attached to discriminate identical elements from one another, and the suffixes "A", "B", and "C" mean that three fuel cell stacks 1 are provided.

In the following description, when referring to arbitrary fuel cell stack 1, description is made using "fuel cell stack 1" while attaching only reference mark "1" and omitting the suffix. In this case, fuel cell stack 1 indicates one or more fuel cell stacks. This description style also holds true with respect to power controller 2.

In fuel cell system 100, a number of fuel cell stacks 1 under power generation is varied according to an amount of power to be generated. When an amount of power to be generated by fuel cell system 100 is small, not all fuel cell stacks 1 perform power generation, but a minimum requisite number of fuel cell stacks 1 perform power generation for obtaining the amount of power to be generated. When the amount of power to be generated by fuel cell system 100 is large, a larger number of fuel cell stacks 1 are used to perform power generation (all fuel cell stacks 1 are used depending on the magnitude of the amount of power to be generated).

As described above, when power generated by fuel cell system 100 is connected to system power supplied from, for example, an electric power company, the isolated operation of fuel cell system 100 needs to be detected, in cases where the system power is cut due to the power failure and the like.

Power controller 2 detects the isolated operation. When a plurality of power controllers 2 simultaneously detect the isolated operation, the failure may occur in which the isolated operation state cannot be detected due to, for example, mutual interference in some cases.

Hence, only one power controller 2 is defined to detect the isolated operation, whereby the isolated operation state can stably be detected. Power controller 2 for detecting the isolated operation is set as master power controller 2, and remaining power controllers 2 are set as slave power controllers 2 to be subordinate to master power controller 2.

Master power controller 2 needs to constantly detect the isolated operation while fuel cell system 100 performs power generation. Therefore, when fuel cell system 100 performs power generation, fuel cell stacks 1 connected to master power controller 2 needs to perform power generation.

Hence, when master power controller 2 is fixed to specific power controller 2, an operation time of fuel cell stack 1 connected to this power controller 2 becomes longer than those of other fuel cell stacks 1, whereby degradation of only specific fuel cell stack 1 is progressed. In such a case, when specific fuel cell stack 1 reaches its end of life, fuel cell system 100 cannot be operated.

Accordingly, master power controller 2 needs to be set such that master power controller 2 is changed to different power controller 2.

In this exemplary embodiment, controller 3 sets a timing when different power controller 2 is set as master power controller 2 based on the operation time of fuel cell stack 1.

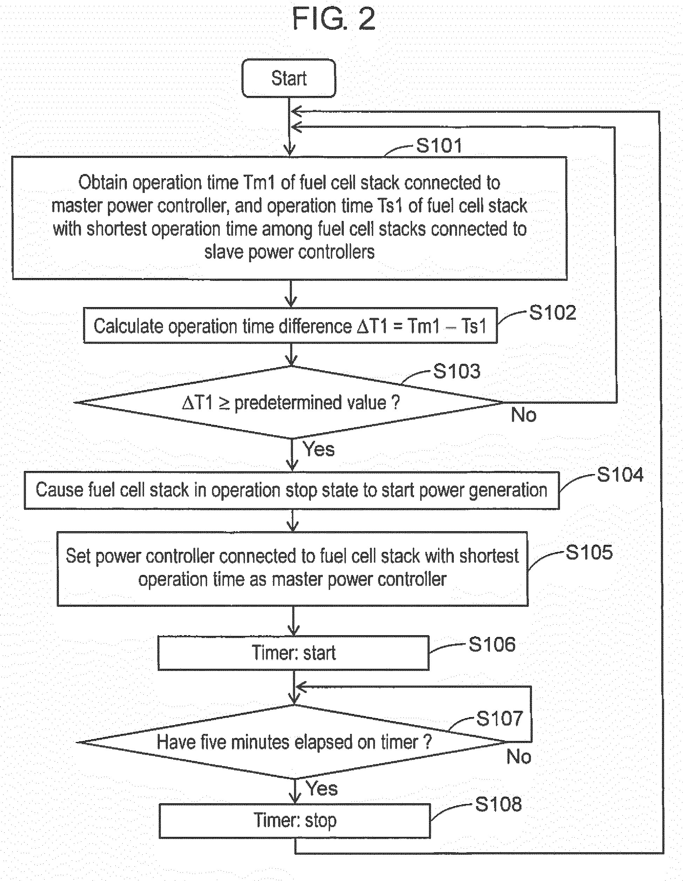

Hereinafter, operations and advantageous effects of fuel cell system 100 having the above-described configuration will be described with reference to FIG. 2.

FIG. 2 is a flowchart illustrating an operating method for a fuel cell system according to a first exemplary embodiment of the present invention. Operations (steps S) illustrated in the flowchart of FIG. 2 are executed based on control of controller 3.

As illustrated in FIG. 2, controller 3 causes fuel cell system 100 to start operating when power is applied to fuel cell system 100, and constantly performs the following operations. The following description will be made assuming that current master power controller 2 is power controller 2A.

Controller 3 obtains information on operation time Tm1 of fuel cell stack 1A connected to master power controller 2A. Further, controller 3 obtains information on operation time Ts1 of fuel cell stack 1 (herein, fuel cell stack 1B for example) with the shortest operation time among fuel cell stacks 1 connected to slave power controllers 2 (step S101).

Controller 3 then calculates difference ΔT1 between the operation time of fuel cell stack 1A and the operation time of fuel cell stack 1B by subtracting Ts1 from Tm1 (step S102). When calculated ΔT1 is not less than a predetermined time (Yes in step S103), controller 3 causes fuel cell stack 1 that is currently in an operation stop state (herein, fuel cell stack 1B) to start power generation (step S104).

In this exemplary embodiment, the predetermined time is set to five hours. Further, when ΔT1 calculated in step S102 is less than five hours that is the predetermined time (No in step S103), the process returns to step S101, and operations subsequent to step S101 are performed again. In step S104, after fuel cell stack 1B has started power generation, power controller 2B connected to fuel cell stack 1B, which is fuel cell stack 1 with the shortest operation time, is set as master power controller 2 (step S105).

Control from step S101 to step S105 is performed at a period longer than a time required for fuel cell stack 1 to start power generation. For example, in this exemplary embodiment, a timer is set such that the control is performed at a period of five minutes, and is then caused to start (step S106). Next the process waits until a lapse of five minutes on the timer (step S107). After the lapse of five minutes, the timer is stopped (step S108), the process returns to step S101, and operations subsequent to step S101 are performed again.

With such a configuration (control), master power controller 2 can be changed such that the operation time of fuel cell stack 1 connected to master power controller 2 does not become longer than the operation times of other fuel cell stacks 1 by more than the predetermined time (for example, five hours).

Power controller 2 connected to fuel cell stack 1 with the shortest operation time is configured to be master power controller 2 to be newly set, whereby operation times of all fuel cell stacks 1 can be equalized. As described above, degradation of only specific fuel cell stack 1 can be prevented, and thus the life time of fuel cell system 100 can be prolonged.

Note that a number of each of fuel cell stack 1 and power controller 2 is not limited to three, and any number may be used, as long as the number is more than one.

Fuel cell stacks 1A to 1C are not limited to be configured with the solid polymer fuel cell, and may be configured with a fuel cell of any kind. For example, a solid oxide fuel cell or a phosphoric acid fuel cell are used.

Note that the oxygen containing gas used for power generation in fuel cell stacks 1A to 1C may be gas produced by reforming a hydrocarbon base raw material such as town gas and liquefied petroleum gas (LPG), or may be pure hydrogen gas.

Note that each of power controllers 2A to 2C is not limited to the inverter that converts DC power into AC power, and may be a device that coverts DC power into DC power of a different voltage.

An amount of power to be generated by fuel cell system 100 may be modified according to a power load of, for example, a house or commercial facility to which fuel cell system 100 is installed, or may be modified conforming to a certain power-generation pattern. As long as the amount of power to be generated in fuel cell system 100 can be modified, the amount of power can be modified based on any condition.

The operation time may be an accumulated power-generation time, or may be a successive power-generation time. Moreover, the operation time is not limited to the time during which fuel cell stack 1 generates power, and may be a time during which oxidizing gas is fed to fuel cell stack 1 or a time during which oxygen containing gas is fed to fuel cell stack 1, for example.

Note that the predetermined time used for changing power controller 2 in step S103 is not limited to five hours, and may be any period of time as long as specific fuel cell stack 1 is not degraded. However, when the predetermined time is set short, fuel cell stack 1 may frequently repeat starting and stopping. Therefore, the predetermined time is preferably set in hours, not in seconds or in minutes.

Note that, in fuel cell system 100, the operations illustrated in the flowchart of FIG. 2 may constantly be performed taking a time point when power is applied to fuel cell system 100 as a start of the operation of fuel cell system 100, may be performed during activation and during power generation, or may be performed only during power generation.

Note that, in fuel cell system 100, when step S104 is executed during power generation, fuel cell stack 1 to start power generation is fuel cell stack 1 with the shortest operation time.

While fuel cell system 100 continuously performs power generation, a difference is produced between operation times of fuel cell stacks 1A to 1C. This is because at least one or more fuel cell stacks 1 are in the operation stop state, and therefore, a difference is produced between operation times of fuel cell stacks 1 that are in the operation stop state and an operation time of fuel cell stack 1 connected to master power controller 2.

When setting for master power controller 2 is changed in step S105, it is preferable that fuel cell system 100 stops the operation of fuel cell stack 1 that has been connected to master power controller 2 before the change. This configuration can suppress the operation time of fuel cell stack 1 whose operation time has become long from being prolonged.

Furthermore, in fuel cell system 100 according to this exemplary embodiment, fuel cell stacks 1 are connected in parallel, but are not limited thereto. Fuel cell stacks 1 may be connected in series.

In this exemplary embodiment, the operation time of fuel cell stack 1 connected to master power controller 2 transiently becomes longer than the operation times of fuel cell stacks 1 connected to slave power controllers 2. However, this does not cause a problem of durability in fuel cell stack 1, because fuel cell stack 1 with the shortest operation time is set as fuel cell stack 1 connected to master power controller 2 when master power controller 2 is set.

Note that, a timing when master power controller 2 is set is not limited to the above description. In fuel cell system 100, controller 3 may constantly control operations of fuel cell stacks 1 and power controllers 2 such that the operation time of fuel cell stack 1 connected to mater power controller 2 does not become the longest among fuel cell stacks 1.

### (Second exemplary embodiment)

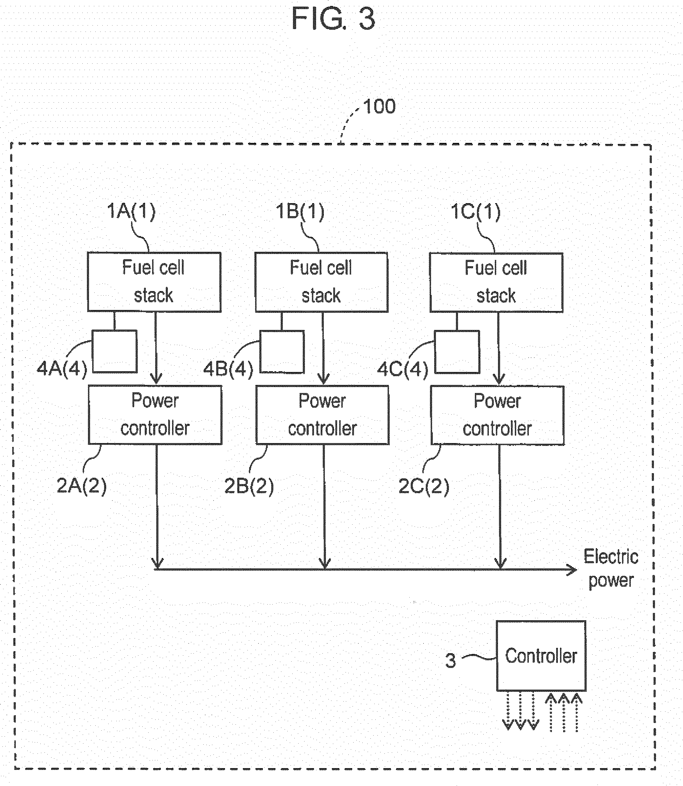

A configuration of a fuel cell system according to a second exemplary embodiment of the present invention is hereinafter described with reference to FIG. 3. FIG. 3 is a block diagram illustrating the configuration of the fuel cell system according to the second exemplary embodiment of the present invention. It should be noted that constituent elements substantially identical to the constituent elements of the first exemplary embodiment are denoted by the identical reference marks and description will be omitted in this exemplary embodiment.

As illustrated in FIG. 3, fuel cell system 100 of this exemplary embodiment is different from that of the first exemplary embodiment in that voltage measurement units 4A, 4B, 4C for measuring respective voltages of fuel cell stacks 1A to 1C are provided.

Each of voltage measurement units 4 is only necessary to measure the voltage of fuel cell stack 1, and in this exemplary embodiment, a voltage meter that measures a total voltage output from fuel cell stack 1 is used.

Operations of respective apparatuses configuring fuel cell system 100 of this exemplary embodiment are different from those of the first exemplary embodiment in that controller 3 performs control for changing master power controller 2 to one of other slave power controllers 2 by using, not the operation time of fuel cell stack 1 connected to master power controller 2, but the voltages of fuel cell stacks 1. Other operations of respective apparatuses are the same as those of the first exemplary embodiment, and therefore a description thereof is omitted.

In fuel cell stack 1, for example, when degradation progresses with a lapse of operation time, the voltage to be output is lowered. In this exemplary embodiment, a degradation state of fuel cell stack 1 is determined based on a current absolute value of the voltage of fuel cell stack 1.

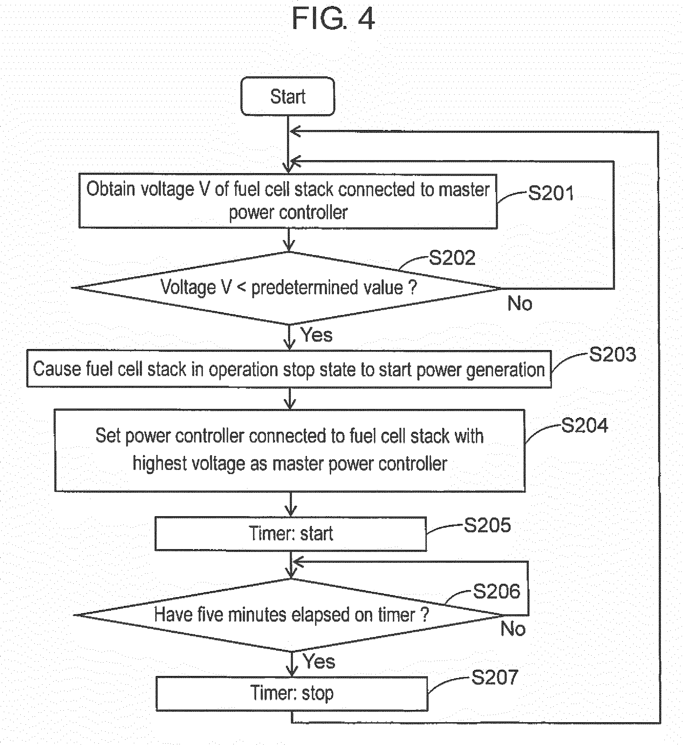

Hereinafter, operations and advantageous effects of fuel cell system 100 according to this exemplary embodiment, which has the above-described configuration, will be described with reference to FIG. 4.

FIG. 4 is a flowchart illustrating an operating method for fuel cell system 100 according to the second exemplary embodiment of the present invention. Operations (steps S) of fuel cell system 100 illustrated in the flowchart of FIG. 4 are executed based on control of controller 3. As illustrated in FIG. 4, controller 3 causes fuel cell system 100 to start operating when power is applied to fuel cell system 100, and constantly performs the following operations.

First, the following description will be made assuming that current master power controller 2 is power controller 2A.

Controller 3 measures voltage V of fuel cell stack 1A connected to master power controller 2A by using voltage measurement unit 4A to obtain information on voltage V (step S201). When voltage V is lower than a predetermined value (Yes in step S202), controller 3 causes fuel cell stack 1 that is in the operation stop state to start power generation (step S203). When fuel cell stack 1 with the highest voltage is in the operation stop state, controller 3 causes this fuel cell stack 1 to start power generation. When voltage V is not less than the predetermined value (No in step S202), the process returns to step S201, and operations subsequent to step S201 are executed again.

After performing step S203, controller 3 sets power controller 2 (herein, power controller 2B) connected to fuel cell stack 1 (herein, fuel cell stack 1B, for example) with the highest voltage as master power controller 2 (step S204).

Control from step S201 to step S204 is performed at a period longer than a time required for fuel cell stack 1 to start power generation. For example, in this exemplary embodiment, a timer is set such that the control is performed at a period of five minutes, and is then caused to start, by controller 3 (step S205). Next, controller 3 waits until a lapse of five minutes on the timer (step S206). After the lapse of five minutes (Yes in step S206), the timer is stopped (step S207), the process returns to step S201, and operations subsequent to step S201 are executed again.

As described above, in this exemplary embodiment, master power controller 2 is changed so as to avoid a state in which the voltage of fuel cell stack 1 connected to master power controller 2 is considerably lower than the predetermined value.

Further, as described above, power controller 2 connected to fuel cell stack 1 that has the highest voltage and whose degradation is not progressed is configured to be master power controller 2 to be newly set, whereby degradation degrees of all fuel cell stacks 1 can be equalized.

As described above, fuel cell system 100 of this exemplary embodiment can prevent degradation of only specific fuel cell stack 1, and thus the life time of fuel cell system 100 can be prolonged.

Note that voltage measurement unit 4 may be configured to measure a total voltage output from both ends of fuel cell stack 1. Alternatively, voltage measurement unit 4 may be configured to measure a voltage of each cell in fuel cell stack 1. Alternatively, voltage measurement unit 4 may be configured to measure a voltage of a single cell representing fuel cell stack 1. As long as the degradation state of fuel cell stack 1 can be obtained by using the voltage measured by voltage measurement unit 4, any voltage associated with fuel cell stack 1 may be measured.

Further, means for determining the degradation of fuel cell stack 1 is not limited to the absolute value of the voltage of fuel cell stack 1, and may be a voltage reduction amount or a voltage reduction rate from a start of operation, for example. As long as the degradation state of fuel cell stack 1 can be detected by using the voltage of fuel cell stack 1, any means may be used.

It is preferable that the predetermined value used in step S202 is not constant, and is modified according to an operation state. For example, the predetermined value is preferably set to a voltage value lower than the voltage value of fuel cell stack 1 with the highest voltage by a constant amount.

Further when fuel cell stack 1 with the highest voltage is selected in step S204, current voltages of power generation of respective fuel cell stacks 1 may be used, or voltage values measured in previous power generation may be used. As long as fuel cell stack 1 with the least degradation can be selected, voltages measured at any timing may be used.

### (Third exemplary embodiment)

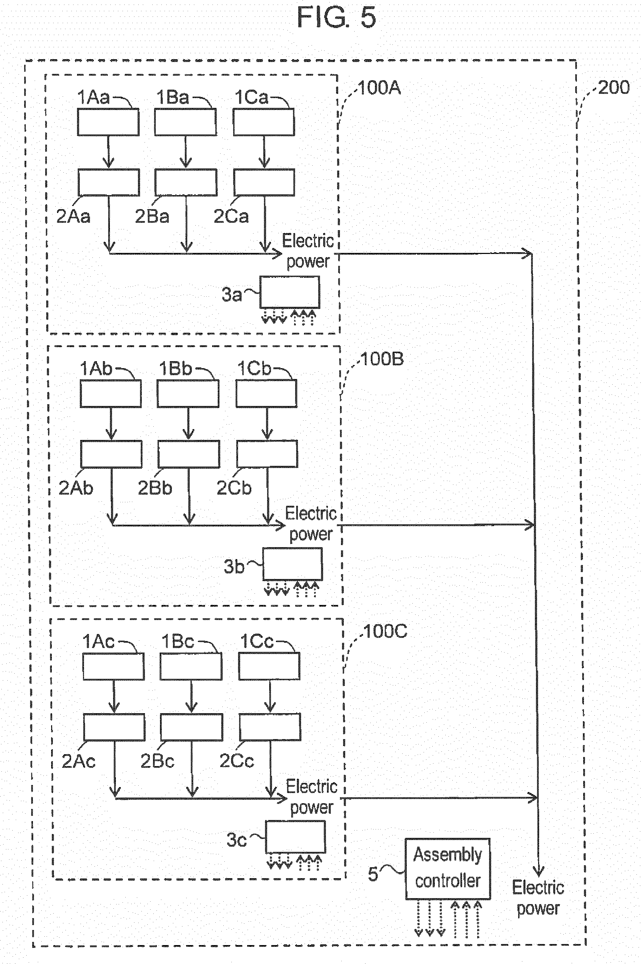

A configuration of a fuel-cell-system assembly according to a third exemplary embodiment of the present invention is hereinafter described with reference to FIG. 5.

FIG. 5 is a block diagram illustrating the configuration of the fuel-cell-system assembly according to the third exemplary embodiment of the present invention. As illustrated in FIG. 5, fuel-cell-system assembly 200 of this exemplary embodiment is configured by assembling a plurality of fuel cell systems 100 according to the first exemplary embodiment, and configurations other than this point are the same as those of the first exemplary embodiment.

The third exemplary embodiment will be described below focusing on a difference from the first exemplary embodiment.

Respective apparatuses configuring fuel cell systems 100A, 100B, 100C in fuel-cell-system assembly 200 according to this exemplary embodiment are similar to those of the first exemplary embodiment. Therefore, the constituent elements similar to those according to the first exemplary embodiment are attached with the identical reference marks and description will be omitted.

As a method for attaching the reference marks, in order to clarify which fuel cell system 100 among fuel cell systems 100A to 100C includes the apparatus, one of a to c is respectively attached corresponding to fuel cell systems 100A to 100C at the end of the reference mark. For example, fuel cell stack 1B included in fuel cell system 100C is denoted as fuel cell stack 1Bc.

Description of fuel cell stack 1 is not limited to any of fuel cell stacks 1, and refers to any one of fuel cell stacks 1 or all of fuel cell stacks 1. Description of fuel cell stack 1B does not identify which one of fuel cell systems 100A to 100C, but refers to fuel cell stack 1B of any of fuel cell systems 100A to 100C. A number of fuel cell stacks 1B is both single and plural. For example, description of fuel cell stack lBc means that the fuel cell stack is identified as one of fuel cell stacks 1 (for example, fuel cell stack 1Bc) in one of fuel cell systems 100A to 100C (for example, fuel cell system 100C).

Fuel cell system 100A includes fuel cell stacks 1Aa, 1Ba, 1Ca, power controllers 2Aa, 2Ba, 2Ca, and controller 3a. Fuel cell system 100B includes fuel cell stacks 1Ab, 1Bb, 1Cb, power controllers 2Ab, 2Bb, 2Cb, and controller 3b. Fuel cell system 100C includes fuel cell stacks 1Ac, 1Bc, 1Cc, power controllers 2Ac, 2Bc, 2Cc, and controller 3c.

Assembly controller 5 may be any controller as long as the controller has a control function for controlling fuel-cell-system assembly 200, and includes an operation processor (not illustrated) and a storage (not illustrated) that stores a control program. A CPU is used as the operation processor, for example. A memory is used as the storage, for example.

Fuel-cell-system assembly 200 is configured by assembling fuel cell system 100A, fuel cell system 100B, and fuel cell system 100C. Power generated by respective fuel cell systems 100 (fuel cell systems 100A, 100B, 100C) is collectively supplied to the outside of fuel-cell-system assembly 200.

When power generated by fuel-cell-system assembly 200 is connected to system power supplied from, for example, an electric power company, an isolated operation of fuel-cell-system assembly 200 needs to be detected (isolated operation detection) in cases where the system power is cut due to the power failure and the like.

Power controller 2 detects the isolated operation. When a plurality of power controllers 2 simultaneously detect the isolated operation, the failure may occur in which the isolated operation state cannot be detected due to, for example, mutual interference in some cases.

In fuel-cell-system assembly 200 of this exemplary embodiment, one power controller 2 of fuel-cell-system assembly 200 is set as power controller 2 for detecting the isolated operation. This configuration enables stable detection of an isolated operation state. Power controller 2 for detecting the isolated operation is set as master power controller 2, and remaining power controllers 2 are set as slave power controllers 2 to be subordinate to master power controller 2.

Master power controller 2 needs to constantly detect the isolated operation while fuel-cell-system assembly 200 performs power generation. Therefore, when fuel-cell-system assembly 200 performs power generation, fuel cell stacks 1 connected to master power controller 2 needs to perform power generation.

Hence, when master power controller 2 is fixed to specific power controller 2, an operation time of fuel cell stack 1 connected to this power controller 2 becomes longer than those of other fuel cell stacks 1, whereby degradation of only specific fuel cell stack 1 is progressed. In such a case, when specific fuel cell stack 1 reaches its end of life, fuel-cell-system assembly 200 cannot be operated.

Accordingly, master power controller 2 needs to be set such that master power controller 2 is changed to different power controller 2, before degradation of specific fuel cell stack 1 is progressed.

In this exemplary embodiment, a timing when different power controller 2 is set as master power controller 2 is determined based on the operation time of fuel cell stack 1.

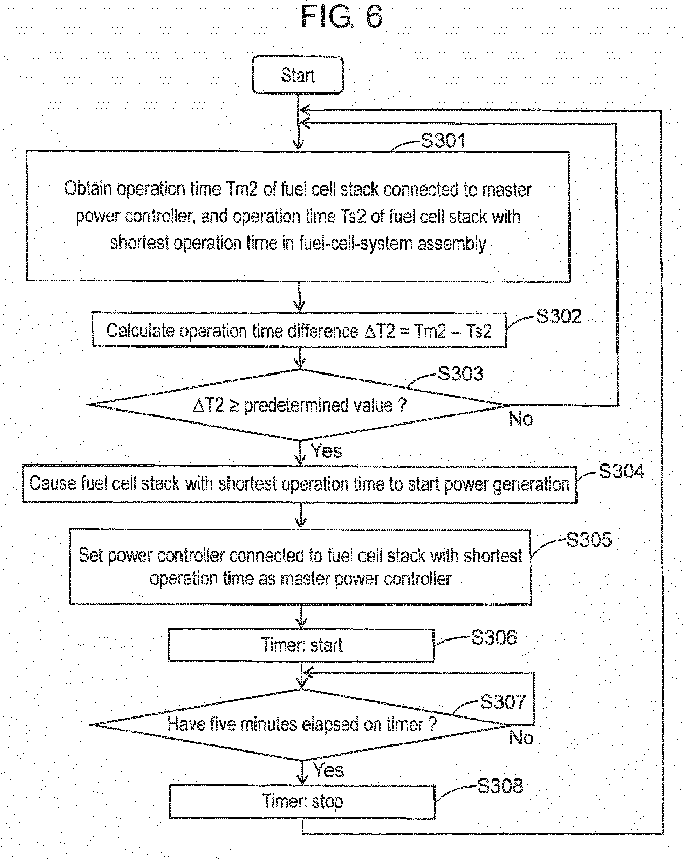

Hereinafter, operations and advantageous effects of fuel-cell-system assembly 200 having the above-described configuration will be described with reference to FIG. 6.

FIG. 6 is a flowchart illustrating an operating method for the fuel-cell-system assembly according to the third exemplary embodiment of the present invention. Operations in the flowchart illustrated in FIG. 6 are executed based on control of assembly controller 5.

As illustrated in FIG. 6, assembly controller 5 causes fuel-cell-system assembly 200 to start operating when power is applied to fuel-cell-system assembly 200, and constantly performs the following operations.

First, assembly controller 5 obtains information on operation time Tm2 of fuel cell stack 1 (herein, fuel cell stack 1Cc) connected to master power controller 2 (herein, power controller 2Cc for example). Further, assembly controller 5 obtains information on operation time Ts2 of fuel cell stack 1 (herein, fuel cell stack 1Ab for example) with the shortest operation time in fuel-cell-system assembly 200 (step S301).

Next, assembly controller 5 calculates difference ΔT2 (hereinafter, referred to as operation time difference ΔT2) between operation time Tm2 and operation time Ts2 by subtracting Ts2 from Tm2 (step S302). Assembly controller 5 then confirms whether operation time difference ΔT2 is not less than a predetermined time (step S303). When operation time difference ΔT2 is not less than the predetermined time (Yes in step S303), the process proceeds to step S304. When operation time difference ΔT2 is less than the predetermined time, the process returns to step S301, and operations subsequent to step S301 are executed. In this exemplary embodiment, the predetermined time is set to five hours.

When the process proceeds to step S304, assembly controller 5 causes fuel cell stack 1Ab with the shortest operation time to start power generation (step S304). After fuel cell stack 1 has started power generation, power controller 2Ab connected to fuel cell stack 1Ab with the shortest operation time is set as master power controller 2 (step S305). With this configuration, master power controller 2 can be changed from power controller 2Cc to power controller 2Ab.

Control from step S301 to step S305 is performed at a period longer than a time required for fuel cell stack 1 to start power generation. For example, in this exemplary embodiment, a timer is set such that the control is performed at a period of five minutes, and is then caused to start (step S306). Next, the process waits until a lapse of five minutes on the timer (step S307). After the lapse of five minutes (Yes in step S307), the timer is stopped (step S308), the process returns to step S301, and operations subsequent to step S301 are performed again.

As described above, in this exemplary embodiment, master power controller 2 is changed such that the operation time of fuel cell stack 1 connected to master power controller 2 does not become longer than the operation times of other fuel cell stacks 1 by more than the predetermined time.

Power controller 2 connected to fuel cell stack 1 with the shortest operation time is configured to be master power controller 2 to be newly set, whereby operation times of all fuel cell stacks 1 can be equalized. As described above, in this exemplary embodiment, degradation of only specific fuel cell stack 1 can be prevented, and thus the life time of fuel-cell-system assembly 200 can be prolonged.

Note that a number of fuel cell systems 100 configuring fuel-cell-system assembly 200 is set to three in this exemplary embodiment, but is not limited thereto. Fuel-cell-system assembly 200 may be configured as the assembly including any number of fuel cell systems 100, as long as the number is more than one. Any means may be used for supplying oxygen containing gas and oxidizing gas to respective fuel cell stacks 1, as long as the means can stably supply oxygen containing gas and oxidizing gas. For example, in fuel-cell-system assembly 200, each of fuel cell stacks 1 may include supply means such as a pump. Furthermore, in fuel-cell-system assembly 200, each of fuel cell systems 100 may include supply means such as a pump. In each of fuel cell systems 100, oxygen containing gas and oxidizing gas may be branched and supplied to respective fuel cell stacks 1. Alternatively, in fuel-cell-system assembly 200, common supply means may be disposed for supplying oxygen containing gas and oxidizing gas, and oxygen containing gas and oxidizing gas supplied from the common supply means may be branched in fuel-cell-system assembly 200 and may be supplied to respective fuel cell stacks 1.

Note that, this exemplary embodiment illustrates the configuration in which each of fuel cell systems 100 includes controller 3, and further fuel-cell-system assembly 200 includes assembly controller 5 for controlling entire fuel-cell-system assembly 200. However, fuel-cell-system assembly 200 may be configured such that assembly controller 5 controls all fuel cell systems 100 without disposing controller 3 in each of fuel cell systems 100. In this case, controller 3 in each of fuel cell systems 100 does not perform control associated with setting of the master power controller.

Note that, this exemplary embodiment uses the operation time of fuel cell stack 1 as the condition for changing master power controller 2, but the present invention is not limited thereto. Any condition may be used as long as the degradation state of fuel cell stack 1 can be obtained from the condition. For example, voltages of fuel cell stacks 1 may be used as the condition.

The operation time may be an accumulated power-generation time, or may be a successive power-generation time. The operation time is not limited to the time during which fuel cell stack 1 generates power, and may be a time during which oxidizing gas is fed to fuel cell stacks 1 or a time during which oxygen containing gas is fed to fuel cell stacks 1, for example.

A method for identifying fuel cell stack 1 with the shortest operation time in step S301 may be a method for identifying fuel cell stack 1 with the shortest operation time in each of fuel cell systems 100, and then identifying one with the shortest operation time among those identified fuel cell stacks 1. Alternatively, a method for comparing all fuel cell stacks 1 in fuel-cell-system assembly 200, and identifying one with the shortest operation time may be used. In fuel-cell-system assembly 200, any method may be used as long as the method can identify fuel cell stack 1 with the shortest operation time.

Note that, the operations (steps S) in the flowchart of FIG. 6 may constantly be performed taking a time point when power is supplied to fuel-cell-system assembly 200 as a start, may be performed during activation and during power generation, or may be performed only during power generation.

Note that the predetermined time used for changing power controller 2 in step S303 may be any time unless specific fuel cell stack 1 is degraded. However, when the predetermined time is set short, fuel cell stack 1 may frequently repeat starting and stopping. Therefore, the predetermined time is preferably set in hours, not in seconds or in minutes.

Many modifications and other exemplary embodiments of the present invention will be apparent to those skilled in the art, from the above descriptions. Thus, the descriptions are to be construed only as examples, and are provided for the purpose of teaching those skilled in the related art the best mode of carrying out the present invention.

The fuel cell system that is an example of the exemplary embodiments in the present invention and the assembly of the same can perform stable system linkage operation even while including the plurality of fuel cell stacks and the plurality of power controllers, and can detect the isolated operation when power failure has occurred.

Furthermore, the operation time of only the specific fuel cell stack can be suppressed from becoming long, and thus the operation times of the plurality of fuel cell stacks can be equalized. Therefore, degradation of only the specific fuel cell stack can be prevented, and thus the life times of the fuel cell system and the assembly of the same can be prevented from being shortened.

### INDUSTRIAL APPLICABILITY

As described above, the present invention provides a fuel cell system and an assembly of the same capable of preventing only a specific fuel cell stack from being degraded in comparison with other fuel cell stacks. Therefore, the present invention can widely be used in applications such as home-use fuel cell systems and business-use fuel cell systems, which are used to perform stable power generation for a long period of time.

### REFERENCE MARKS IN THE DRAWINGS

1, 1A, 1B, 1C: fuel cell stack
1Aa, 1Ab, 1Ac, 1Ba, 1Bb, 1Bc, 1Ca, 1Cb, 1Cc: fuel cell stack
2, 2A, 2B, 2C: power controller
2Aa, 2Ab, 2Ac, 2Ba, 2Bb, 2Bc, 2Ca, 2Cb, 2Cc: power controller
3, 3a, 3b, 3c: controller
4, 4A, 4B, 4C: voltage measurement unit
5: assembly controller
100, 100A, 100B, 100C: fuel cell system
200: fuel-cell-system assembly

## Claims

1. A fuel cell system (100) comprising:
a plurality of fuel cell stacks (1A-1C) configured to perform power generation using oxygen containing gas and oxidizing gas;
a plurality of power controllers (2A-2C) respectively connected to the plurality of fuel cell stacks (1A-1C) on a one-to-one basis, to extract power generated by the plurality of fuel cell stacks (1A-1C); and
a controller (3) configured to control operations of the plurality of fuel cell stacks (1A-1C) and the plurality of power controllers (2A-2C) such that at least one of a number of the plurality of fuel cell stacks (1A-1C) under operation and a number of the plurality of power controllers (2A-2C) under operation is varied according to a load to be driven,
wherein the controller (3) is further configured to set one power controller of the plurality of power controllers (2A-2C) as a master power controller and each of the other power controllers as a slave power controller,
**characterized in that**
the controller is further configured to set the master power controller such that the operation time of the fuel cell stack (1A) connected to the master power controller (2A) does not exceed the operation time of a fuel cell stack (1B-1C) connected to a slave power controller (2B-2C) by more than a predetermined time.

2. The fuel cell system (100) according to claim 1, wherein the controller is further configured, when a difference between the operation time of the fuel cell stack (1A) connected to the master power controller and the operation times of the fuel cell stacks (1B-1C) connected to the slave power controllers (2B-2C) exceeds the predetermined time, to cause a fuel cell stack that is in an operation stop state among the plurality of fuel cell stacks to perform power generation, and to set a power controller connected to a fuel cell stack with a shortest operation time among the plurality of power controllers (2A-2C) as the master power controller.

3. A fuel cell system (100) comprising:
a plurality of fuel cell stacks (1A-1C) configured to perform power generation using oxygen containing gas and oxidizing gas;
a plurality of power controllers (2A-2C) respectively connected to the plurality of fuel cell stacks (1A-1C) on a one-to-one basis, to extract power generated by the plurality of fuel cell stacks (1A-1C); and
a controller configured to control operations of the plurality of fuel cell stacks (1A-1C) and the plurality of power controllers (2A-2C) such that a number of the plurality of fuel cell stacks (1A-1C) under operation and the plurality of power controllers (2A-2C) under operation is varied according to magnitude of a load to be driven; and
a voltage measurement unit (4A-4C) configured to measure respective voltages of the plurality of fuel cell stacks (1A-1C),
wherein the controller is further configured to set one of the plurality of power controllers (2A-2C) as a master power controller and each of the other power controllers (2A-2C) as slave power controllers,
**characterized in that**
the controller is further configured, when the voltage of a fuel cell stack connected to the master power controller among the plurality of fuel cell stacks (1A-1C) becomes less than a predetermined value, to set a different power controller among the plurality of power controllers (2A-2C) as the master controller.

4. The fuel cell system (100) according to any one of claims 1 to 3, wherein
the plurality of power controllers (2A-2C) are configured with system linkage inverters, and
the slave power controllers (2B-2C) are configured not to detect an isolated operation.

5. A fuel-cell-system assembly comprising:
a plurality of fuel cell systems (100A-100C) according to any of claims 1 to 4 configured to operate in conjunction with each other, and
an assembly controller configured to control the plurality of fuel cell stacks (1A-1C) and the plurality of power controllers (2A-2C) such that only one of the plurality of power controllers (2A-2C) included in the plurality of fuel cell systems (100A-100C) is set as a master power controller.

6. The fuel-cell-system assembly according to claim 5, wherein the assembly controller is configured to set, as the master power controller, a power controller connected to a fuel cell stack with a shortest operation time among the plurality of power controllers (2A-2C) included in the plurality of fuel cell systems (100A-100C).

## Patentansprüche

1. Brennstoffzellensystem (100) umfassend:
eine Vielzahl von zum Durchführen einer Energieerzeugung unter Verwendung von Sauerstoff enthaltendem Gas und oxidierendem Gas ausgebildeten Brennstoffzellenstapeln (1A-1C);
eine Vielzahl von jeweils mit der Vielzahl von Brennstoffzellenstapeln (1A-1C) auf einer Basis von Eins zu Eins verbundenen Leistungsreglern (2A-2C) zum Entnehmen der von der Vielzahl von Brennstoffzellenstapeln (1A-1C) erzeugten Energie; und
ein Steuergerät (3) ausgebildet zum Steuern des Betriebs der Vielzahl von Brennstoffzellenstapeln (1A-1C) und der Vielzahl von Leistungsreglern (2A-2C), so dass wenigstens einer einer Zahl der Vielzahl von Brennstoffzellenstapeln (1A-1C) im Betrieb und einer Zahl der Vielzahl von Leistungsreglern (2A-2C) im Betrieb entsprechend einer anzutreibenden Last variiert wird,
wobei das Steuergerät (3) ferner zum Festlegen von einem Leistungsregler der Vielzahl von Leistungsreglern (2A-2C) als ein Hauptleistungsregler und jedem der anderen Leistungsregler als ein Nebenleistungsregler ausgebildet ist,
**dadurch gekennzeichnet, dass**
das Steuergerät ferner zum Einstellen des Hauptleistungsreglers so ausgebildet ist, dass die Betriebszeit des mit dem Hauptleistungsregler (2A) verbundenen Brennstoffzellenstapels (1A) nicht die Betriebszeit eines mit einem Nebenleistungsreglers (2B-2C) verbundenen Brennstoffzellenstapels (1B-1C) um mehr als eine vorgegebene Zeit überschreitet.

2. Brennstoffzellensystem (100) nach Anspruch 1, wobei das Steuergerät ferner ausgebildet ist, wenn ein Unterschied zwischen der Betriebszeit des mit dem Hauptleistungsregler verbundenen Brennstoffzellenstapels (1A) und den Betriebszeiten der mit den Nebenleistungsreglern (2B-2C) verbundenen Brennstoffzellenstapel (1B-1C) die vorgegebene Zeit überschreitet, einen Brennstoffzellenstapel, der sich in einem Betriebsstoppzustand befindet, von der Vielzahl von Brennstoffzellenstapel zum Durchführen der Energieerzeugung zu veranlassen und einen mit einem Brennstoffzellenstapel mit einer kürzesten Betriebszeit aus der Vielzahl von Leistungsreglern (2A-2C) verbundenen Leistungsregler als den Hauptleistungsregler festzulegen.

3. Brennstoffzellensystem (100) umfassend:
eine Vielzahl von zum Durchführen einer Energieerzeugung unter Verwendung von Sauerstoff enthaltendem Gas und oxidierendem Gas ausgebildeten Brennstoffzellenstapeln (1A-1 C);
eine Vielzahl von jeweils mit der Vielzahl von Brennstoffzellenstapeln (1A-1C) auf einer Basis von Eins zu Eins verbundenen Leistungsreglern (2A-2C) zum Entnehmen der von der Vielzahl von Brennstoffzellenstapeln (1A-1C) erzeugten Energie; und
ein Steuergerät ausgebildet zum Steuern des Betriebs der Vielzahl von Brennstoffzellenstapeln (1A-1C) und der Vielzahl von Leistungsreglern (2A-2C), so dass eine Zahl der Vielzahl von Brennstoffzellenstapeln (1A-1C) im Betrieb und der Vielzahl von Leistungsreglern (2A-2C) im Betrieb entsprechend der Größe einer anzutreibenden Last variiert wird; und
eine zum Messen der entsprechenden Spannungen der Vielzahl von Brennstoffzellenstapeln (1A-1C) ausgebildete Spannungsmesseinheit (4A-4C),
wobei das Steuergerät ferner zum Festlegen von einem der Vielzahl von Leistungsreglern (2A-2C) als ein Hauptleistungsregler und jeden der anderen Leistungsregler (2A-2C) als Nebenleistungsregler ausgebildet ist,
**dadurch gekennzeichnet, dass**
das Steuergerät ferner ausgebildet ist, wenn die Spannung eines mit dem Hauptleistungsregler verbundenen Brennstoffzellenstapels aus der Vielzahl von Brennstoffzellenstapel (1A-1C) niedriger ist als ein vorgegebener Wert, einen anderen Leistungsregler aus der Vielzahl von Leistungsreglern (2A-2C) als Hauptregler festzulegen.

4. Brennstoffzellensystem (100) nach einem der Ansprüche 1 bis 3, wobei die Vielzahl von Leistungsreglern (2A-2C) mit Systemverbindungswechselrichtern ausgebildet ist, und
die Nebenleistungsregler (2B-2C) ausgebildet sind, einen isolierten Betrieb nicht zu erfassen.

5. Brennstoffzellensystem-Baugruppe umfassend:
eine Vielzahl von Brennstoffzellensystemen (100A-100C) nach einem der Ansprüche 1 bis 4, ausgebildet für einen Betrieb in Verbindung miteinander, und
ein Baugruppen-Steuergerät ausgebildet zum Steuern der Vielzahl von Brennstoffzellenstapeln (1A-1C) und der Vielzahl von Leistungsreglern (2A-2C), so dass nur einer der Vielzahl von Leistungsreglern (2A-2C) enthalten in der Vielzahl von Brennstoffzellensystemen (100A-100C) als ein Hauptleistungsregler festgelegt ist.

6. Brennstoffzellensystem-Baugruppe nach Anspruch 5, wobei das Baugruppen-Steuergerät zum Festlegen eines mit einem Brennstoffzellenstapels mit einer kürzesten Betriebszeit verbundenen Leistungsreglers aus der Vielzahl von in der Vielzahl von Brennstoffzellensystemen (100A-100C) enthaltenen Leistungsreglern (2A-2C) als der Hauptleistungsregler ausgebildet ist.

## Revendications

1. Système de pile à combustible (100) comprenant :
une pluralité d'empilements de piles à combustible (1A-1C) configurée pour effectuer une génération d'énergie en utilisant un gaz contenant de l'oxygène et un gaz oxydant ;
une pluralité de contrôleurs de puissance (2A-2C) respectivement connectés à la pluralité d'empilements de piles à combustible (1A-1C) sur une base de un-pour-un, pour extraire une énergie générée par la pluralité d'empilements de piles à combustible (1A-1C) ; et
un contrôleur (3) configuré pour contrôler des opérations de la pluralité d'empilements de piles à combustible (1A-1C) et la pluralité de contrôleurs de puissance (2A-2C) de sorte qu'au moins un d'un nombre de la pluralité d'empilements de piles à combustible (1A-1C) en fonctionnement et un nombre de la pluralité de contrôleurs de puissance (2A-2C) en fonctionnement varie selon une charge à entraîner,
dans lequel le contrôleur (3) est configuré en outre pour définir un contrôleur de puissance de la pluralité de contrôleurs de puissance (2A-2C) en tant que contrôleur de puissance maître et chacun des autres contrôleurs de puissance en tant que contrôleur de puissance asservi,
**caractérisé en ce que**
le contrôleur est configuré en outre pour définir le contrôleur de puissance maître de sorte que la durée de fonctionnement de l'empilement de piles à combustible (1A) connecté au contrôleur de puissance maître (2A) ne dépasse pas la durée de fonctionnement d'un empilement de piles à combustible (1B-1C) connecté à un contrôleur de puissance asservi (2B-2C) de plus d'une durée prédéterminée.

2. Le système de pile à combustible (100) selon la revendication 1, dans lequel le contrôleur est configuré en outre, lorsqu'une différence entre la durée de fonctionnement de l'empilement de piles à combustible (1A) connecté au contrôleur de puissance maître et les durées de fonctionnement des empilements de piles à combustible (1B-1C) connectés aux contrôleurs de puissance asservis (2B-2C) dépasse la durée prédéterminée, pour faire en sorte qu'un empilement de piles à combustible qui est dans un état d'arrêt de fonctionnement parmi la pluralité d'empilements de piles à combustible effectue une génération d'énergie, et pour définir un contrôleur de puissance connecté à un empilement de piles à combustible ayant une durée de fonctionnement la plus courte parmi la pluralité de contrôleurs de puissance (2A-2C) en tant que contrôleur de puissance maître.

3. Système de pile à combustible (100) comprenant :
une pluralité d'empilements de piles à combustible (1A-1C) configurée pour effectuer une génération d'énergie en utilisant un gaz contenant de l'oxygène et un gaz oxydant ;
une pluralité de contrôleurs de puissance (2A-2C) respectivement connectés à la pluralité d'empilements de piles à combustible (1A-1C) sur une base de un-pour-un, pour extraire une énergie générée par la pluralité d'empilements de piles à combustible (1A-1C) ; et
un contrôleur configuré pour contrôler des opérations de la pluralité d'empilements de piles à combustible (1A-1C) et la pluralité de contrôleurs de puissance (2A-2C) de sorte qu'un nombre de la pluralité d'empilements de piles à combustible (1A-1C) en fonctionnement et la pluralité de contrôleurs de puissance (2A-2C) en fonctionnement varie selon une amplitude d'une charge à entraîner ; et
une unité de mesure de tension (4A-4C) configurée pour mesurer des tensions respectives de la pluralité d'empilements de piles à combustible (1A-1C),
dans lequel le contrôleur est configuré en outre pour définir un de la pluralité de contrôleurs de puissance (2A-2C) en tant que contrôleur de puissance maître et chacun des autres contrôleurs de puissance (2A-2C) en tant que contrôleurs de puissance asservis,
**caractérisé en ce que**
le contrôleur est configuré en outre, lorsque la tension d'un empilement de piles à combustible connecté au contrôleur de puissance maître parmi la pluralité d'empilements de piles à combustible (1A-1C) devient inférieure à une valeur prédéterminée, pour définir un contrôleur de puissance différent parmi la pluralité de contrôleurs de puissance (2A-2C) en tant que contrôleur maître.

4. Le système de pile à combustible (100) selon l'une quelconque des revendications 1 à 3, dans lequel
la pluralité de contrôleurs de puissance (2A-2C) est configurée avec des inverseurs de liaison de système, et
les contrôleurs de puissance asservis (2B-2C) sont configurés pour ne pas détecter un fonctionnement isolé.

5. Assemblage de systèmes de pile à combustible comprenant :
une pluralité de systèmes de pile à combustible (100A-100C) selon l'une quelconque des revendications 1 à 4
configurés pour fonctionner conjointement l'un avec l'autre, et
un contrôleur d'assemblage configuré pour contrôler la pluralité d'empilements de piles à combustible (1A-1C) et la pluralité de contrôleurs de puissance (2A-2C) de sorte que seul un de la pluralité de contrôleurs de puissance (2A-2C) inclus dans la pluralité de systèmes de pile à combustible (100A-100C) est défini en tant que contrôleur de puissance maître.

6. L'assemblage de systèmes de pile à combustible selon la revendication 5, dans lequel le contrôleur d'assemblage est configuré pour définir, en tant que contrôleur de puissance maître, un contrôleur de puissance connecté à un empilement de piles à combustible ayant une durée de fonctionnement la plus courte parmi la pluralité de contrôleurs de puissance (2A-2C) inclus dans la pluralité de systèmes de pile à combustible (100A-100C).
